(19) Europäisches Patentamt
European Patent Office
Office européen des brevets

(11) EP 4 006 116 A1

(12) EUROPEAN PATENT APPLICATION

(43) Date of publication:
**01.06.2022 Bulletin 2022/22**

(21) Application number: **20306448.0**

(22) Date of filing: **26.11.2020**

(51) International Patent Classification (IPC):
***C09J 5/02*** *(2006.01)* ***C09J 9/00*** *(2006.01)*
***C09J 11/08*** *(2006.01)* ***C09D 5/08*** *(2006.01)*
***C23F 11/173*** *(2006.01)* ***B05D 7/14*** *(2006.01)*

(52) Cooperative Patent Classification (CPC):
**C09J 11/08; B29C 70/00; C09D 5/086; C09J 5/00; C09J 5/02; C09J 9/00; C23F 11/173;** B05D 3/102; B05D 2202/25; C09D 133/02

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **RHODIA OPERATIONS**
**93300 Aubervilliers (FR)**

(72) Inventors:
- **GODY, Guillaume**
  **92500 RUEIL-MALMAISON (FR)**
- **SOOD, Rakhi**
  **390008 Gujarat (IN)**
- **LABEAU, Marie-Pierre**
  **92310 SEVRES (FR)**
- **REVEST, Xavier**
  **75018 Paris (FR)**
- **VALODKAR, Vinayak**
  **390001 Vadodara (IN)**
- **MOTIWALE, Manali**
  **390023 Gujarat (IN)**
- **GRANIER, Cindy**
  **69007 Lyon (FR)**
- **LAYEC, Justine**
  **31000 Toulouse (FR)**

(74) Representative: **Roussel, Sandrine**
**Rhodia Opérations**
**Intellectual Assets Management**
**52, rue de la Haie-Coq**
**93306 Aubervilliers Cedex (FR)**

# (54) METAL SURFACE TREATMENT

(57) The instant invention concerns the use of at least one polymer P obtained by radical copolymerization of a mixture of (i) acrylic acid; (ii) optionally methacrylic acid; and (iii) at least one ethylenically unsaturated monomer carrying an unsaturated heterocycle having at least two nitrogen atoms, said monomer being preferably an ethylenically unsaturated imidazole, for treating a metallic surface for treating a metallic surface intended to be coated by a paint, a varnish or an adhesive, for example intended to be adhesive-bonded to another surface, in order to impart a resistance to the adhesive failure to the resulting bonding.

## Description

The instant invention relates to the field of the treatment of surfaces based on metal, and more specifically metal surfaces intended to be coated with film-forming compositions such as paints, varnishes or adhesive compositions. The invention is especially directed to a treatment of said metal surfaces aiming at providing an enhancement of the adherence of the film-forming composition on the metal surface, which is especially efficient with adhesive compositions.

In order to provide an enhancement of the adherence of film-forming organic compositions such as paints, varnishes or adhesives on metal surfaces, especially on aluminum or steel, several methods have been proposed, including i.a. the deposit of inorganic coatings on the surface of the metal, especially the so-called "conversion coating".

The term *"conversion coating"* is well known in the art and refers to a layer formed on the surface of a metal, that is an advantageous replacement of native oxide on said surface (especially on aluminum), and which is obtained by the controlled chemical formation of a film on the metallic surface by reaction with chemical elements of the metallic surface, so that at least some of the cations dissolved from the metallic material are deposited in the conversion coating.

Typically, coating such conversion coatings are obtained by reacting the metal surface with solutions containing metal cation and fluorides. In the past, chromium-containing coatings have been proposed (typically obtained by reaction of the surface with a solution including $H_2CrF_6$), and, more recently, less toxic coatings based e.g. on zirconium, titanium or other metals (for example obtained by reaction of the surface with a solution including $H_2TiF_6$, $H_2ZrF_6$, $H_2HfF_6$, $H_2AlF_6$, $H_2SiF_6$, $H_2GeF_6$, $H_2SNF_4$, or $HBF_4$). A conversion coating may include other compounds such as silane precursors for example.

For enhancing the adhesion on a coating such as conversion coatings it is known to add some additives, especially organic polymers. In this connection, it has been for example described the use of polyacrylic acids. A typical additive, especially suitable for paint compositions, is ACUMER™ 1510 available from DOW (and previously from Rohm & Haas) that has been widely described for this kind of application. For more details in this connection, it may be especially be referred to WO20109411, WO20109413, WO97/13588, US 4,191,596, or US4921552.

One aim of the present invention is to provide a new method for treating a metal surface, which imparts a good adherence of organic compositions, and especially of adhesive compositions applied to the metal surface (the adhesive may be applied by the coating of an adhesive compositions, typically an organic film forming compositions, that is generally available as a paste, more or less fluid ; or by the way of a preformed adhesive film, such as the L-F610 Epoxy Adhesive Film commercialized by L&L).

To this end, the instant invention proposes to make use of a specific polymer, optionally (but not necessarily) together with (namely before, during, or after) the formation of a conversion coating, which leads to a treated metal surface that reveals very interesting: when coated by a film-forming composition such as a paint, varnish or adhesive composition, a good adherence is obtained between the surface and the coated composition. Besides, a good protection of the surface is obtained, especially against corrosion. When the metal surface is coated with an adhesive layer, the coated surface may typically be used for ensuring a so-called "adhesive bonding" between said coated metal surface and another surface (typically a similar metal surface treated with the same polymer) that is placed in contact with all or part of the adhesive coating. In this application, the specific polymer used according to the invention reduces the occurrence of adhesive failure (in other word it imparts a kind of "resitance to the adhesive failure"). In the scope of the invention, the inventors have now observed that the strength of the adherence between the adhesive and the metal surface is especially high, to such an extent that cohesive failure appears instead of (or at least more preferably than) adhesive failure when a sufficiently high mechanical stress is applied for separating the adhesive-bonded surfaces even after storage in aggressive conditions.

More precisely, the instant invention make use of at least one polymer P, which is a polymer obtained by radical copolymerization of a mixture of:

(i) acrylic acid ; and
(ii) optionally methacrylic acid ; and
(iii) and at least one monomer M which is an ethylenically unsaturated monomer carrying an unsaturated heterocycle having at least two nitrogen atoms, said monomer M being preferably an ethylenically unsaturated imidazole having the Formula (I) below:

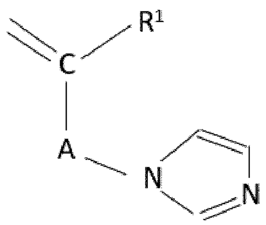

**Formula (I)**

wherein:

$R^1$ is H or a methyl group $-CH_3$, and preferably H ; and

A is a linkage selected from the group consisting of:

a single covalent bond ; and

a spacer group such as a group $-CO-NH-(CH2)_n-$ or -CO-O-(CH2)n-

wherein n is an integer from 1 to 5, typically equal to 3 or 4.

All or part of the imidazole functions present in the polymer P may optionally be quaternized. In that case each of the quaternized imidazole function is associated with a proper counter anion (for example Br-, TFSI or any other suitable mono or polyanion) and exhibits typically the following formula:

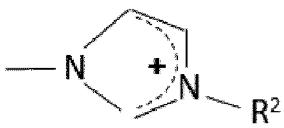

wherein $R^2$ is typically an alkyl group, carrying typically from 1 to 12 (preferably 1 to 6) carbon atoms.

The quaternization of all or part of the imidazole functions may result from a quaternization of all or part of the monomers and/or from a post-quaternization of the imidazole functions of the polymer.

The monomer M may for example be:

- vinylimadazole of formula (Ia):

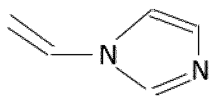

**(Ia)**

- quaternized vinimidazole having the formula (Ib):

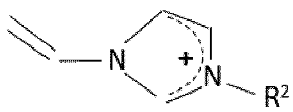

**(Ib)**

wherein $R^2$ is as defined above ;

- a monomer of formula (Ic)

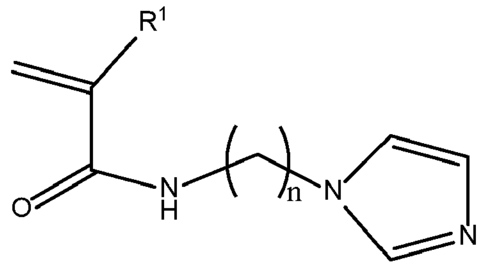

**(Ic)**

wherein n and $R^1$ are as defined above, n being typically equal to 3 ;

- a quaternized monomer of formula (Id)

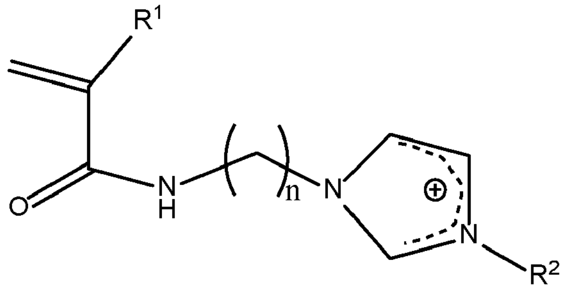

**(Id)**

wherein n, $R^1$ and $R^2$ are as defined above, n being typically equal to 3;

- a mixture thereof (for example a mixture of monomers (Ia) and (Ib) ; or a mixture of monomers (Ic) and (Id); or a mixture of the 4 monomers).

Instead of the imidazole group, the monomer M may bear another unsaturated heterocycle having at least two nitrogen atoms, for example M may bear a pyrazole group, an indazole group, or a triazole group.

The divalent spacer group A in formula (I) may typically be group $-CO-NH-(CH_2)_n-$ or - $CO-O-(CH_2)_n$, but any other covalent linker group may be contemplated, for example resulting from the reaction of a compound of formula (I-X):

- 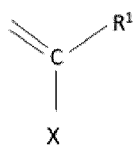

- with a compound of formula (I-Y):

- 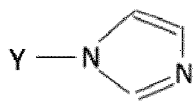

- wherein X and Y are two groups reacting together for forming a covalent bond.
- For example, Y may be a $-(CH_2)_m-NH_2$ group wherein m is from 1 to 4, preferably 2 or 3. In that case, X may be for example a carboxylic acid, an acid chloride, an anhydride or an epoxy.
- According to another variant, Y is be a $-(CH_2)_m-OH$ group wherein m is from 1 to 4, preferably 2 or 3. In that case, X may be for example a carboxylic acid, an acid chloride, an anhydride or an ester.
- The polymer P is a polymer as obtained by copolymerizing monomers (i),(ii) and (iii) namely having the structure that is obtained via such a polymerization, but the polymer P is not necessarily obtained by this process. As an alternative, the polymer P may for example be obtained by a first step (E1) of copolymerizing acrylic acid, methacrylic acid and a compound of formula (I-X) leading to a polymer P0 and then a second step (E2) of post-grafting of the polymer P0 by a reaction with compound (I-Y).

- When Y is a $-(CH_2)_m-NH_2$ group in the compound (I-Y) used in step (E2), the compound (I-X) used in the step (E1) may advantageously be selected from : additional acrylic or methacrylic acid, or ester thereof; maleic anhydride ;vinylbenzyyl chloride; glycidylmethacrylate ; and (blocked) isocyanatoethyl methacrylate.
- When Y is a $-(CH_2)_m-OH$ group in the compound (I-Y) used in step (E2), the compound (I-X) used in the step (E1) may advantageously be selected from additional acrylic acid, methacrylic acid, maleic anhydride or their esters.
- Besides, a quaternization of all or part of the imidazole functions of polymer P may occur, resulting from a quaternization of all or part of the monomers and/or form a post-quaternization of all or part of the imidazole functions of the polymer.

Typically, the polymer P is obtained by radical copolymerization of a mixture of acrylic acid, preferably methacrylic acid, and at least one monomer M. Preferably, the polymer P is obtained by radical copolymerization of a mixture having the following molar ratio, based on the total quantity of acrylic acid, methacrylic acid and 2-hydroxyethyl methacrylate phosphates of formula (a):

- acrylic acid (AA): from 5 to 50%, preferably from 20 to 40% (e.g., about 25 to 30 %),
- methacrylic acid (MAA): from 0 to 90%, preferably from 25 to 90%, more preferably from 60 to 80% (e.g., about 65 to 75%)
- monomer M : from 1 to 30, for example from 1 to 20%, notably from 2 to 15 % (e.g., about 3 to 10 %)

Besides, the polymer P used according to the invention preferably has a number average molecular weight (Mn) of at least 7,500 Da, e.g. 10 kDa to 1500 kDa, for example 10 kDa to 150 kDa, notably between 10 and 100 kDa. Typically, the polymer P used according to the invention has a number average molecular weight of from 20 to 100 kDa, e.g., 20 to 50 kDa.

A polymer P especially suitable for the invention is a random copolymer having a weight average molecular weight of about 20 to 50 kDa, that is the copolymerized product of a mixture of acrylic acid, optionally methacrylic acid, and a monomer M, preferably in a molar ratio of about 26/70/04 to 20/70/10.

The polymer P can be prepared by conventional controlled radical polymerization and by controlled radical polymerization. The controlled radical polymerization technology will be selected according to the composition of the targeted polymer, for example by MADIX with xanthates such as Rhodixan A1 from Solvay for polymers containing up to 30mol% of methacryl- based monomers (example AA/MAA/ vinyl imidazole = 50/30/20 mol/mol/mol), or by RAFT with trithiocarbonates such as 4-((((2-carboxyethyl)thio)carbonothioyl)thio)-4-cyanopentanoic acid (BM1433, from Boron Molecular) for polymers containing more than 30mol% of methacryl-based monomers (example AA/MAA/vinyl imidazole = 20/70/10 mol/mol/mol).

According to a specific aspect, one specific object of the instant invention is the use of at least one polymer P as defined above for treating a metallic surface intended to be coated by a paint, a varnish or an adhesive, preferably an adhesive. The metal surface to be treated is preferably a surface comprising a metal selected from aluminum, steel, zinc, magnesium and their alloys. The invention is especially interesting for metal surface of aluminum or aluminum alloy.

According to a possible (but not compulsory) embodiment, a conversion coating is applied on the metallic surface to be treated, by reaction of said surface with a conversion composition (in other words, a conversion composition a is applied on the metallic surface for forming a conversion coating thereon). In that case, typically:

- the conversion composition include all or part of the polymer P as an additive ; and/or
- the conversion coating is applied on the metallic surface and then all or part of the polymer P is applied on the conversion coating.

According to another possible embodiment, compatible with the previous one, all or part of the polymer P is present in a paint, a varnish or an adhesive coating applied on the surface, optionally after application of a conversion coating on the metal surface.

According to another aspect, one specific object of the invention is a process for coating a metallic surface with a paint, a varnish or an adhesive, including a step of treating said surface with at least one composition including at least one polymer P as defined above. In that scope, the composition comprising the polymer P may typically be:

- a conversion composition including a polymer P ; and/or
- a solution or a dispersion of the polymer P, preferably applied on the surface after having applied a conversion

coating on the surface to be treated ; and/or

- the paint, varnish or adhesive, that may comprise all or part of the polymer P.

The polymer P useful according to the invention and the compositions comprising the polymer P (especially the conversion compositions including a polymer P; the paint, varnish or adhesive compositions containing the same; and the solutions or dispersions including the polymer P useful for treating the surface) also constitute specific objects of the instant invention.
Typically, the polymer P is present in the conversion composition and/or in a solution or dispersion applied on the surface to be treated. In that case, the paint, varnish or adhesive is generally applied on a surface previously treated by the polymer. According to some specific embodiments, an additional layer may applied between the treated surface and the paint, varnish or adhesive is applied.
One more specific object of the instant invention is the use of at least one polymer P as defined above for treating a first metallic surface (S1) intended to be bonded to a second surface (S2) by adhesive bonding and for imparting a resistance to the adhesive failure to the bonding (in other words for providing the joint between surfaces S1 and S2 with a resistance to adhesive failure) An additional advantage of the adhesive bonding obtained according to the invention is that it is highly resistant to corrosive atmospheres and to wet atmospheres, which lead to long lasting adhesive bonding. In most cases, the polymer is also used for obtaining this additional effect (namely for further imparting to the bonding a resistance to corrosive atmospheres and to wet atmospheres, in other words for obtaining both a very effective, but also long lasting adhesion).
Typically (but not necessarily), the second surface (S2) is also a metallic surface, having or not the same nature as the first surface (S1). According to an advantageous embodiment, the second surface (S2) is a metallic surface also treated with a polymer P of formula (a), generally but not necessarily identical to the polymer P of the first surface (S1).
More generally, the polymer P used according to the invention is preferably used for treating both surfaces (S1) and (S2) before the adhesive bonding of the two surfaces, especially when (S2) is a metallic surface.
The first metal surface (S1) is preferably a surface comprising a metal selected from aluminum, steel, zinc, magnesium, titanium, copper and their alloys, or cobalt-nickel alloys. The invention is especially interesting for metal surface of aluminum or aluminum alloys. The invention is especially interesting when the surface (S1) is a metal surface of aluminum or aluminum alloy.
The second surface (S2) may be metallic or non-metallic surface.
According to an interesting embodiment, the second surface (S2) is a surface comprising a metal, advantageously selected from aluminum, steel, zinc, magnesium titanium, copper and their alloys, or cobalt-nickel alloys. According to one embodiment, the nature of the surfaces (S1) and (S2) is the same, but they can also be distinct according to other possible embodiments of the invention. According to an interesting variant, both surfaces (S1) and (S2) are metal surface of aluminum or aluminum alloys.
According to another possible embodiment, the second surface (S2) is a non-metallic surface, for example a plastic surface e.g. based on polyamide, PEEK or ABS ; or a composite surface based e.g on CFRP or Glass Fiber Reinforced Plastics.
Whatever the exact nature of surfaces (S1) and (S2), according to a possible embodiment, a conversion coating may be applied on the metallic surface (S1), by reaction of said surface with a conversion composition (in other words, a conversion composition is applied on the metallic surface for forming a conversion coating thereon). The use of a conversion coating is however not compulsory according to the invention, and, according to a specific embodiment, no conversion coating is applied on the surface (S1). When a conversion composition is used, typically:

- the conversion composition includes all or part of the polymer P as an additive ; and/or
- the conversion coating is applied on the surface (S1) and then all or part of the polymer P is applied on the conversion coating.

The second surface (S2) may also receive a similar conversion coating, in the same conditions, especially when this second surface (S2) is a metallic surface. But again, the use of a conversion coating is not compulsory according to the invention, and, according to a specific embodiment, no conversion coating may be applied on the surface (S2).
According to another possible embodiment, compatible with the previous ones, all or part of the polymer P is contained in the adhesive composition applied onto the surfaces (S1) and (S2). According to this embodiment, the polymer may typically be introduced in the adhesive composition as a solid powder, said powder comprising the polymer alone or the polymer at the surface of a mineral filler (said powder may typically be obtained by spray drying a solution or suspension of the polymer, typically in presence of mineral filler). According to another aspect, one other specific

object of the invention is a process for bonding a first metallic surface (S1) with a second surface (S2) (said surfaces being preferably as defined above), including:

- treating said first surface (S1) with at least one composition including at least one polymer P as defined above (said surface (S1) being preferably cleaned and/or activated before the treatment with the polymer P) ; and
- *optionally* treating the second surface (S2) with at least one composition including at least one polymer P as defined above(said surface (S2) being then preferably cleaned and/or activated before the treatment with the polymer P) ; and
- bonding the surfaces (S1) and (S2) *via* an adhesive composition applied between the two surfaces.

In that scope, the composition comprising the polymer P may typically be:

- a conversion composition including a polymer P ; and/or
- a solution or a dispersion of the polymer P, preferably applied on the surface after having applied a conversion coating on the surface to be treated ; and/or
- the adhesive composition, that may comprise all or part of the polymer P.

Typically, the polymer P is present in the conversion composition and/or in a solution or dispersion applied on a conversion coating. In that case, the adhesive is applied on a surface previously treated by the polymer.

According to some specific embodiments, an additional layer is applied between the treated surface (S1) and the adhesive (this is for example the case for the treatment of metal coil or part on a first site, that has then to be bonded on a second site: in that case, a lubricant may be applied on the treated coil or part, in order to protect it during transportation and storage and to facilitate downstream operations (coil cutting into sheets, blanking, stamping, forming, ...).

According to yet another aspect, a specific object of the instant invention are the materials comprising two adhesive-bonded surfaces including a first metal surface comprising a metal surface (S1) which is in all or part (i) treated with a polymer P as defined above and (ii) bonded to a second surface (S2) preferably as defined above via an adhesive.

These materials include i.a. materials that have a metal surface (S1) in all or part covered by:

- at least one coating (typically a conversion coating and/or a paint, a varnish or an adhesive layer) comprising at least one polymer P ; and/or
- a layer (typically a conversion coating) comprising a reaction product of the polymer P as defined above with a metal of the treated surface or another compound present in said layer, or a polymer P strongly linked with said other compound (*via* a complexation, a ionic bonding or hydrogen bonding for example).

Specific features and possible embodiments will now be described in more details.

***The metal surface (S1)***

Any metal surface may be treated with a polymer P of the invention, but the invention is especially suitable for treating metal surfaces of:

- aluminum or an aluminum-based alloy ; or
- steel, for example galvanized steel (hot dip galvanized HDG or electrogalvanized EG) ; or cold rolled steel (CRS) ; or
- magnesium or magnesium-based alloys ; or
- Zinc or zinc-based alloys ; or
- Titanium or titanium-based alloys.

The invention is especially interesting for metal surface of aluminum and aluminum alloys, such as Aluminum Alloy AA 5754, tested in the appended examples, or other alloys such as those of Series 1xxx, 2xxx, 3xxx, 4xxx, 5xxxx, 6xxx, 7xxx, such as AA 1050, 2024, 3003, 5182, 5005, 6111, 6016, 6060, 6063, 6182, 7075.

***The optional conversion coating***

When a conversion coating is applied on one or both of the surfaces (S1) and/or (S2), it may be obtained by contacting the surface with any conversion composition known from the prior art.

Contacting the metal surface with the conversion composition may be made by any means known per se, such as dip coating in a conversion bath or spray coating, as illustrative examples.

The conversion composition used according to the invention may typically contain fluorides anions and cationic metals, e.g. compounds such as $H_2CrF_6$, or more preferably chromium free compounds such as $H_2TiF_6$, $H_2ZrF_6$, $H_2HfF_6$ , $H_2AlF_6$ , $H_2SiF_6$ , $H_2GeF_6$, $H_2SNF_4$, or $HBF_4$.

The conversion composition may also include other compounds, such as silane precursors for example, and/or cerium salts, and/or terbium molybdate.

In addition, according to a specific embodiment, the conversion composition may contain all or part of the polymer P used according to the invention for treating the surface. In that case, the application of the conversion layer leads per se to a surface treatment according to the invention.

Otherwise, the treatment is typically obtained after the formation of the conversion layer, by contacting the metal surface carrying the conversion layer with the polymers P (they may typically be applied on the conversion layer in the form of a solution or a suspension of polymers P, or within a paint, a varnish or an adhesive composition applied on the conversion layer).

According to a specific embodiment, it may be contemplated to make use of the polymer P both in the conversion composition and within the adhesive composition applied on the conversion layer.

The following examples illustrate the invention.

**EXAMPLES**

**Example 1.**

Polymers according to the invention, obtained by a copolymerization of a mixture of acrylic acid, methacrylic acid, and N-Vinylimidazole (VIm), were tested in these examples.

**Example 1.1**

The polymer P1 (AA/MAA/VIm 26/70/04 mol/mol/mol) has been prepared as follows: Solution 1: 7,8g of 2,2'-Azobis(2-methylpropionamidine)dihydrochloride (V50) at 97% are dissolved in 68.3g of water.

Solution 2a (AA/VIm=26/4 mol/mol): 35,4g of AA and 7g of VIm are diluted in 17.6g of water.
Solution 2b: caustic solution at 35% in water (113mL).
Solution 3: 114g of MAA are diluted into 74g of water.

Solution 1, along with 5% of Solution 2a and 114g of deionized water are charged at Room temperature into a 700ml reactor fitted with adequate stirring, inlets, feeding and T control devices.

The reactor Temperature is then heated to 60°C within 1h, with nitrogen degassing. When T has reached 60°C, 2 feeds are started, under nitrogen blanket:

- the remaining 95% of Solution 2a over 4h, along with Solution 2b
- Solution 3, over 5h

Once the longest feed is over, the reaction mixture is maintained for 2 additional hours at 60°C, before it is cooled down to room temperature.

The smooth incorporation of monomers was monitored by 1N NMR spectroscopy over the polymerization and the final product was analyzed by both 1H NMR spectroscopy and size exclusion chromatography.

A Brucker 300MHz spectrometer was used to record proton nuclear magnetic resonance (1H NMR) spectra. To measure AA, MAA and VIm conversions, four drops of the reaction mixture were diluted in around 1 g of deuterated water (D2O). AA conversion > 99.6%; MAA conversion = 100%; VIm conversion = 100%

Average molecular weights were measured by Size Exclusion Chromatography (SEC) equipped with a Multi-Angle Laser Light Scattering (MALLS) Mini Dawn TREOS detector and an Agilent concentration detector (RI detector). The SEC system is running on three columns Varian Aquagel OH mixed H, 8 $\mu$m, 3*30 cm at a flow rate of 1 mL / min and with the following mobile phase: 100 % water, 100mM NaCl, 25mM NaH2PO4, 25Mm Na2HPO4, buffer pH=7. Polymer samples were diluted down to 0.5 active wt% in the mobile phase for at least 4 hours then filtrated in a Millipore

filter 0.45 μm and 100 microliters were injected in the mobile phase flow. Absolute molar masses were obtained with the dn/dC of the poly(acrylic acid) equal to 0.1875 mL/g. Mn = 29.5 kg/mol; Mw = 76 kg/mol; polydispersity index Đ = 2.6.

**Example 1.2**

The same process was used to prepare the polymer **P2** (AA/MAA/ VIm 20/70/10 mol/mol/mol):

Solution 1: 7,0g of 2,2'-Azobis(2-methylpropionamidine)dihydrochloride (V50) at 97% are dissolved in 60.7g of water.
Solution 2a (AA/VIm=20/10 mol/mol): 24.2g of AA and 15.8g of VIm are diluted in 16.6g of water.
Solution 2b: caustic solution at 35% in water (129gL).
Solution 3: 101g of MAA are diluted into 66g of water.
AA conversion = 99%; MAA conversion = 100%; VIm conversion = 98%
Mn = 41 kg/mol; Mw = 107 kg/mol; polydispersity index Đ = 2.6.

Performances of polymers P1 and P2 were assessed with AA5754 type H111 aluminum alloys coupons from FBCG (100mm long, 25mm wide, 3mm thick) through Single Lap Shear (SLS) tests, before and after ageing in corrosive conditions. Coupons were prepared according to the protocol below and assembled to form Single Lap assemblies as described in D1002-10.

**Step 1-** 20 coupons are cleaned and etched all together in one single step, combining cleaning and etching, in a 4L bath at 50°C contained in a stainless steel tank, typically made by diluting a commercially available formulation, Chemtec DBT ALU 200, available from Chemtec Aertec (5g of DBT ALU 200 into 995g of water) for 3mn under light stirring. The coupons were then rinsed twice during 1mn with deionized water.

**Step 2-** the coupons are then pre-treated by dipping for 2mn in the treatment bath, containing the polymer at 50°C and at several concentration indicated in the Table 1 below. They are then rinsed altogether with a flow of deionized water for 1mn and dried for 30mn at 60°C.

**Step 3-** the coupons are then assembled in pairs, each pair forming a so called single lap shear "assembly": two coupons are placed horizontally, parallel, one above the other forming an overlap of 12.5 mm long and 25mm wide ("overlap zone", including one of terminal zone of each of the two coupons of 25mm wide, namely the last 12.5 mm of the 100 mm length of the coupon). A structural high T curing epoxy adhesive bead (Betamate 1496, from Dow) is applied with a gun under 7bars on the overlap zone of the lower coupon. The upper coupon is then pressed, thus forming a bonding zone of 12.5 mm long, and 25mm wide. Paper clips are used to maintain the assembly integrity before and during curing. The adhesive is then cured according to adhesive producer guidelines, typicall for 40mn at 180°C. Finally, paper clips are removed.

**Step 4-** tensile strength test I on assemblies as obtained in step 3

Used material: Zwick/Roell - Z50, with jaws grasping assembly tips over 50mm and a pulling speed of 10mm/mn (each jaw holds one of the bonded coupon of the pair, on a grasping zone of 50 mm of said coupon located at the end zone of each coupon opposite to the overlap zone. The jaws are then moved for pulling each of the coupon horizontally in the direction starting from the bonding zone towards the grasping zone)

**Step 5-** tensile strength test II performed on assemblies as obtained in step 3 after ageing

**5.1. Ageing cyclic test**

A cyclic ageing test is performed according to ASTM G85 - Annex 3 (SWAAT, 2011) in a corrosion chamber Q-FOG CRH 600L, from Q-FOG in the following conditions :

- a 30-minute acidified salt fog spray followed by
- a 90-minute soak at >98% relative humidity
under the following conditions:

    - Chamber temperature - constant 49°C
    - Air saturator temperature - constant 57°C
    - Relative humidity - >98%
    - pH of fall out solution - 2.8 - 3.0
    - Volume of fall out solution - 1.0 - 2.0 ml/80cm$^2$/hour
    - Exposure period - 1000 hours

After the exposure period is completed, the assemblies are washed down with lukewarm water to remove and neutralize excess acid and any remaining salt residues. All assemblies were then air dried using forced ambient temperature before being for submitted to lap-shear tensile testing.

### 5.2. tensile strength test

In the conditions of the tensile strength test I of step 4

The obtained results are reported in Tables 2 to 5 below (the values are average values: the tests were performed on 3 assemblies before ageing and on 5 assemblies after ageing), with the following variations in step 2. Polymers were diluted with de-ionized water and the resulting treatment bath was tested as such (no pH adjustment, "native pH") or after acidification (pH adjusted with sulfuric acid):

**Table 1: conditions of steps 1 and 2**

| Test no. | Step 1: surface degreasing & etching | Step 2: surface treatment | | |
|---|---|---|---|---|
| | | Polymer | Polymer concentration in the bath | pH of the bath |
| 1.1 | 3mn-dip in Chemtec DBT ALU 200 at 50°C followed by a 1mn-rinse | NONE (control) | - | - |
| 1.2 | same | P1 | 1000ppm | 2.5 (pH adjusted with sulfuric acid) |
| 1.3 | same | P1 | 1000ppm | 8.5 (native pH) |
| 1.4 | same | P2 | 1000ppm | 8.4 (native pH) |

Below are reported performances before ageing, after ageing, and the ratio between values after ageing and values before ageing, called "retention":

**Table 2: Maximum LOAD**

| Test no. | **Maximum LOAD** | | | | |
|---|---|---|---|---|---|
| | **Before ageing (test I)** | | **After ageing (test II)** | | Retention (%) |
| | maximum load (N) | STD (N) | maximum load (N) | STD (N) | |
| 1.1 (control) | 10838 | 218 | 3862 | 4293 | 36 |
| 1.2 | 8278 | 473 | 6669 | 409 | 81 |
| 1.3 | 9182 | 349 | 6855 | 288 | 75 |
| 1.4 | 9050 | 79 | 7263 | 278 | 80 |

**Table 3: STRAIN measured at the maximum load**

| Test no. | **STRAIN measured at the maximum load** | | | | |
|---|---|---|---|---|---|
| | **Before ageing (test I)** | | **After ageing (test II)** | | Retention (%) |
| | Strain (MPa) | STD (MPa) | Strain (MPa) | STD (MPa) | |
| 1.1 (control) | 35 | 0.7 | 12 | 14 | 36 |
| 1.2 | 26 | 1.5 | 21 | 1.3 | 81 |
| 1.3 | 29 | 1.1 | 22 | 0.9 | 75 |
| 1.4 | 29 | 0.3 | 23 | 0.9 | 80 |

**Table 4: ENERGY measured at the maximum load**

| Test no. | ENERGY measured at the maximum load | | | | |
|---|---|---|---|---|---|
| | Before ageing (test I) | | After ageing (test II) | | Retention (%) |
| | maximum Energy (J) | STD (MPa) | maximum Energy (J) | STD (MPa) | |
| 1.1 (control) | 12 | 0.8 | 3 | 4 | 24 |
| 1.2 | 14 | 3 | 4 | 0.4 | 31 |
| 1.3 | **22** | 3 | 7 | 1.3 | 32 |
| 1.4 | **20** | 0.8 | 9 | 2 | 45 |

**Table 5: FACIES after bond failure**

| Test no. | FACIES after failure*** | |
|---|---|---|
| | Before ageing (test I) | After ageing (test II) |
| 1.1 (control) | c | ~a |
| 1.2 | ~c | a/c |
| 1.3 | ~c | a/c |
| 1.4 | ~c | a/c |
| *** :<br>**(c):** cohesive fracture<br>**(a):** adhesive fracture<br>**(a/c):** adhesive and cohesive fracture<br>(~**c**)**:** rather cohesive fracture<br>* actual performance | | |

Polymers according to the invention, with an amidopropyl spacer between the polymer backbone and the imidazole group are described in Example 2:

**Example 2:** The polymer P3 (MAA / methacrylamido propyl imidazole 92/08 mol/mol) was prepared as follows:

**Poly acrylic acid synthesis via controlled radical polymerization:**

219 ml of DI water and 69 ml of methanol were taken in a round bottom flask. 30g of acrylic acid was added to the round bottom flask and the reaction mixture was stirred till the solution became homogeneous. 0.32g of Rhodixan A1 as a controlling agent was then added to the solution. The solution was then purged with $N_2$ for 1h. 0.4048g of VA-044 initiator (2,2'-Azobis[2-(2-imidazolin-2-yl)propane]dihydrochloride, TCI) was added to reaction mixture and continued purging for 15 minutes. The polymerization was carried out at 60°C for 5 hours under $N_2$ atmosphere. The reaction mixture was then exposed to air and and an aliquote was taken in $D_2O$ for recording proton NMR spectrum (1H NMR) using NMR (Bruker 400 MHz). It confirmed complete conversion of the acrylic acid monomer. The polymer was precipitated in acetone, dissolved in water and precipitated in acetone again. The precipitated polymer was dried at 60°C for 12 hours under vacuum.

Average molecular weights were measured by Gel Permeation Chromatography (GPC) using Waters 515 instrument equipped with column oven, empower software (GPC module), Shodex RI-71 Detector. The SEC system is running on polymer Lab Aquagel-OH-50 (Linear MW operating range: 500 to 600,000 g/mol, PS equivalent) columns with Guard column, a flow rate of 1 mL / min and with the following mobile phase: 0.25M $NaNO_3$ + 0.03M $Na_2HPO_4$ + 0.003M $NaN_3$-pH-9. Dilute solution of polymer samples at 10 mg/ml were prepared in the mobile phase and then filtrated via a Millipore filter 0.2 $\mu$m before injecting to the system and 100 $\mu$L were injected in the mobile phase flow with a run time of 30 minutes. The measurement was carried out at 40 °C. Polyacrylic acid-Na salt (Polymer Lab-PL2140-0100) was used as the calibration standard. Results are: Mn=26 000 g/mole, Mw=57 000 g/mole, polydispersity index = 2.17.

**Synthesis of an amino propyl imidazole functionalized Polyacrylic acid (Polymer P3) by conventional DCC (dicyclohexylcarbodiimide) coupling reaction in organic NMP solvent:**

In a 500ml round bottom flask equipped with a water condenser and a mechanical agitation, were introduced at room temperature (22°C), 25g of Polyacrylic acid (PAA; synthesized as described above) and 100ml of NMP. The mixture was degassed by bubbling nitrogen in the bulk for 30 minutes at room temperature. Then the reaction mass was heated to 60°C with constant stirring for overnight under Nitrogen atmosphere. After complete dissolution of PAA, 7g of DCC (Sigma Aldrich) was added slowly under stirring at 60°C for 30min, followed by addition of 4.34ml of aminopropyl imidazole (Sigma Aldrich) within 20min ; the reaction medium was then at 70°C for 48 hours.

The polymer was precipitated in Ethyl acetate:THF (1:1) mixture, dissolved in MeOH and re-precipitated in Ethyl acetate. The polymer was dried in vacuum-oven at 70-75°C for 24 hours. The yield of the polymer was around 90%.

The percentage of propyl imidazole groups introduced in the polymer was calculated by recording proton NMR spectrum (1H NMR) using NMR (Bruker 400 MHz). Around 20 mg of the polymer was dissolved in deuterated water ($D_2O$) to record the spectrum. The result is: acrylic acid units / imidazolepropyl acrylamide units = 92/8 mol/mol.

Polymers according to the invention, with imidazolinium groups are described in Example 3 and 4:

**Example 3: The polymer P4 was prepared by full quaternization of polymer P3 with bromo-hexane)**

In a 250ml round bottom flask equipped with a water condenser and a mechanical agitation, were introduced at room temperature (22°C), 7g of aminolmidazole (8mol%) functionalized PAA (Polymer P3, from example 2) and 70ml of NMP. The mixture was degassed by bubbling nitrogen in the bulk for 30 minutes at room temperature. After complete dissolution of the polymer, 11.88g of bromohexane (Sigma Aldrich) was added and allowed to stir at 90°C under Nitrogen atmosphere for 24 hours.

The polymer was precipitated in ethyl acetate:THF (1:1) mixture, re-dissolved in methanol and re-precipitated in Ethyl acetate. The polymer was dried in vacuum-oven at 70-75°C for 24 hours. The yield of the functional polymer was about 50%.

The percentage of quaternization of the imidazole group on the polymer backbone was calculated by recording proton NMR spectrum (1H NMR) using NMR (Bruker 400 MHz). Around 20 mg of the polymer was dissolved in deuterated methanol to record the spectrum. Complete quaternization of the polymer was observed (acrylic acid units / imidazolium hexyl bromide units = 92/8 mol/mol).

The bromide content of the polymer was also calculated by using argentometric titration. Details of the instrument utilized for the measurement are as follows: Metrohm Autotitrator 905, equipped with Ag/AgCl electrode (Metrohm part number: 6.0450.100) and Tiamo software (Version 2.5) as well as analytical balance with capability to weigh up to 0.0001gm.

Following reagents were utilized (obtained from Sigma Aldrich)

1. Methanol
2. 0.01 N Silver Nitrate solution ($AgNO_3$)-Standardize before performing experiment using Anhydrous Potassium Chloride (KCl) in water
3. Potassium Chloride (KCl)
4. 50% v/v Aqueous Nitric acid($HNO_3$)
5. Milli Q water (Deionized water)

Sample preparation and Titration: Quarternized polymer (0.0050 to 0.0060 g) was weighed and dissolved in 30 ml of Methanol and stirred till sample is completely dissolved. 50% v/v aqueous $HNO_3$ (3-4 drop) were added to acidify the sample solution. The solution was titrated against 0.01 N $AgNO_3$ solution using Ag/AgCl electrode. And the end point was noted down as EP1.

$$\mu eq/g \text{ of Ionic Bromide} = (EP1 * 1000 * \text{Actual Normality of } AgNO_3) / \text{wt. of the sample in (g)}$$

$$\text{ppm of Ionic Bromide} = \mu eq/g \text{ of Ionic Bromide} * 79.9 (\text{Molar mass of Bromide})$$

$$\% \text{ of Ionic Bromide} = \text{ppm of Ionic Bromide} / 10000$$

The polymer contained 5% of Bromide by weight.

**Example 4: The polymer P5 was prepared by copolymerizing acrylic acid, methacrylic acid and the monomer resulting from the quaternization of VImidazole by hexylbromide:**

Synthesis of copolymer poly(**meth**acrylic acid-co-acrylic acid-*co*-(3-hexyl1-vinyl-1H-imidazolium-3-bromide, VImBr, synthesized as per the method described in Separation and Purification Technology 224 (2019) 388-396 in the present invention by conventional radical polymerization Initiator: α,α'-Azodiisobutyramidine dihydrochloride, (AAPH or V50, Sigma Aldrich) ;
Monomers: MAA (Sigma Aldrich) = 75 mol%, AA (Sigma Aldrich) = 20%, VImBr = 5 mol%.

**Stock solution:**

AA at 70wt% in $H_2O$, MAA at 60wt% in $H_2O$, VImBr at 70wt% in H2O, V50 at 10wt% in $H_2O$
molar ratio: I / (VImBr+AA+MAA) = 1.5 mol%
Final solid content 35%

In a 100 mL three necked round bottom flask equipped with magnetic stirrer, were introduced, at room temperature (22°C), 0.22 g (5% of stock solution) of acrylic acid, 0.36 g (5% of stock solution) of 3-hexyl1-vinyl-1 H-imidazolium-3-bromide (VImBr), 42 g of water and 0.87 g of V50 (solution in 10 wt% of water). The mixture was degassed by bubbling nitrogen in the bulk for 60 minutes while the temperature in the solution increased up to 60°C. The remaining 95% of stock solution of AA and VImBr was mixed together and total 11.08 g mixture of both monomers was introduced for 3 hours into the reaction mixture. Simultaneously, MAA solution was started and performed over 4 hours (flow rate=0.0723 ml/min). During the monomer addition, the solution became a gel and the reaction was stopped after complete addition of MAA.

Reaction mixture was precipitated in diethylether. Polymer was re-dissolved in methanol and re-precipitated in ethyl acetate. Unreacted monomer was removed by soxhlet in THF. Polymer was filtered and dried under at 60 °C vaccum for 6 hours and characterized by 1H NMR in $D_2O$. The polymer was free from any residual unreacted monomer. Yield of the polymer was about 50%.

Average molecular weights were measured by Gel Permeation Chromatography (GPC) using Waters 515 equipped with column oven, Clarity software (GPC module), Shodex RI-71 Detector. The SEC system is running on two columns- Polymer Lab Aquagel-OH-40 & Polymer Lab Aquagel-OH-30 in series with Guard column, a flow rate of 1 mL / min and with the following mobile phase0.4M NaCl +0.05M $Na_2HPO_4$+ 0.003M $NaN_3$-pH-9(pH adjusted with few drops of 0.05M $NaH_2PO_4$). Dilute solution of polymer samples at 10 mg/ml were prepared in the mobile phase and then filtrated via a Millipore filter 0.2 μm before injecting to the system and 100 μL were injected in the mobile phase flow with a run time of 30 minutes. The measurement was carried out at 40 °C. Ready Cal-Kit PEO/PEG (PSS-PEOkitr1) was used as the calibration standard. Results are: Mn=81 kDa, Mw=162 kDa, Polydispersity index=2.

Performances of Polymers P3, P4 and P5 were assessed with AA5754 H22 aluminum alloys coupons from FBCG (100mm long, 25mm wide, 3mm thick) through Single Lap Shear (SLS) tests, before and after ageing in corrosive conditions. Coupons were prepared and assembled to form Single Lap assemblies as described above for Polymers P1 and P2.

Performances of polymer P2 were also assessed with the same batch of AA5754 H22 aluminum alloys coupons.

Process variations are reported Table 6, performance results Table 7-10.

**Table 6: conditions of steps 1 and 2**

| Test no. | Step 1: surface degreasing & etching | Step 2: surface treatment | | |
|---|---|---|---|---|
| | | Polymer | Polymer concentration in the bath | pH of the bath |
| 2.1 | NONE* (control) | NONE (control) | - | - |
| 2.2 | same | P2 | 1000ppm | 8.45 (native pH) |
| 2.3 | same | P3 | 200ppm | 8.6 (native pH) |

(continued)

| Test no. | Step 1: surface degreasing & etching | Step 2: surface treatment | | |
|---|---|---|---|---|
| | | Polymer | Polymer concentration in the bath | pH of the bath |
| 2.4 | same | P3 | 1000ppm | 8.0 (pH adjusted with caustic soda) |
| 2.5 | same | P4 | 200ppm | 8.3 |
| 2.6 | same | P4 | 1000ppm | 7.7 (pH adjusted with caustic soda) |
| 2.7 | same | P5 | 200ppm | 6.35 (pH adjusted with caustic soda) |
| 2.8 | same | P5 | 1000ppm | 6.55 (pH adjusted with caustic soda) |
| * coupons were wiped with acetone | | | | |

**Table 7: Maximum LOAD**

| Test no. | **Maximum LOAD** | | | | |
|---|---|---|---|---|---|
| | **Before ageing (test I)** | | **After ageing (test II)** | | Retention (%) |
| | maximum load (N) | STD (N) | maximum load (N) | STD (N) | |
| 2.1 (control) | 7432 | 393 | 1059 | 1138 | 14 |
| 2.2 | 9440 | 264 | 7881 | 215 | 83 |
| 2.3 | 9722 | 94 | 8002 | 156 | 82 |
| 2.4 | 9645 | 164 | 8191 | 133 | 85 |
| 2.5 | 9287 | 71 | 8147 | 111 | 88 |
| 2.6 | 9571 | 206 | 8046 | 175 | 84 |
| 2.7 | 9312 | 203 | 7604 | 514 | 82 |
| 2.8 | 9544 | 222 | 7922 | 66 | 83 |

**Table 8: STRAIN at maximum load**

| Test no. | **STRAIN at maximum load** | | | | |
|---|---|---|---|---|---|
| | **Before ageing (test I)** | | **After ageing (test II)** | | Retention (%) |
| | strain (MPa) | STD (MPa) | strain (MPa) | STD (MPa) | |
| 2.1 (control) | 24.0 | 1.3 | 3.4 | 3.7 | 14 |
| 2.2 | 29.6 | 0.5 | 24.8 | 0.6 | 84 |
| 2.3 | 31.0 | 0.2 | 25.4 | 0.9 | 82 |
| 2.4 | 29.7 | 0.5 | 25.7 | 0.5 | 87 |
| 2.5 | 29.5 | 0.2 | 26.0 | 0.7 | 88 |
| 2.6 | 30.0 | 0.5 | 25.7 | 0.7 | 86 |
| 2.7 | 29.4 | 0.8 | 24.6 | 1.6 | 84 |
| 2.8 | 29.8 | 1.0 | 25.3 | 0.6 | 85 |

**Table 9: ENERGY at maximum load**

| Test no. | ENERGY at maximum load | | | | |
|---|---|---|---|---|---|
| | **Before ageing (test I)** | | **After ageing (test II)** | | Retention (%) |
| | energy (J) | STD (J) | energy (J) | STD (J) | |
| 2.1 (control) | 6.0 | 0.7 | 0.1 | 0.2 | 2 |
| 2.2 | 16.0 | 1.7 | 6.5 | 0.3 | 83 |
| 2.3 | 19.0 | 0.8 | 7.2 | 0.4 | 38 |
| 2.4 | 18.4 | 2.7 | 7.8 | 0.7 | 42 |
| 2.5 | 15.1 | 1.0 | 7.4 | 0.7 | 49 |
| 2.6 | 18.1 | 1.9 | 7.1 | 0.6 | 39 |
| 2.7 | 16.8 | 0.6 | 6.4 | 0.8 | 38 |
| 2.8 | 16.2 | 1.5 | 6.4 | 0.3 | 39 |

**Table 10: FACIES after bond failure**

| Test no. | FACIES after failure*** | |
|---|---|---|
| | **Before ageing (test I)** | **After ageing (test II)** |
| 2.1 (control) | a | a |
| 2.2 | c | a/c |
| 2.3 | c | a/c |
| 2.4 | c | a/c |
| 2.5 | c | a/c |
| 2.6 | c | a/c |
| 2.7 | c | a/c |
| 2.8 | c | a/c |
| **(c) :** cohesive fracture<br>**(a) :** adhesive fracture<br>**(a/c) :** adhesive and cohesive fracture | | |

## Claims

1. The use of at least one polymer P obtained by radical copolymerization of a mixture of (i) acrylic acid; (ii) optionally methacrylic acid; and (iii) at least one monomer M which is an ethylenically unsaturated monomer carrying an unsaturated heterocycle having at least two nitrogen atoms, said monomer M being preferably an ethylenically unsaturated imidazole having the Formula (I) below:

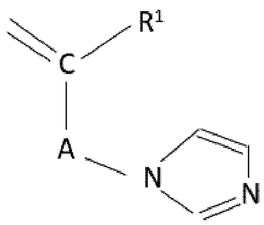

**Formula (I)**

wherein:

$R^1$ is H or a methyl group $-CH_3$, and preferably H ; and
A is a linkage selected from the group consisting of:

a single covalent bond ; and
a spacer group such as a group $-CO-NH-(CH2)_n-$ - or -CO-O-(CH2)n-
wherein n is an integer from 1 to 5, typically equal to 3 or 4,

for treating a metallic surface intended to be coated by a paint, a varnish or an adhesive.

**2.** The use of claim 1, wherein the polymer P is used for treating a first metallic surface (S1) intended to be bonded to a second surface (S2) by adhesive bonding, and for imparting a resistance to the adhesive failure to the bonding.

**3.** The use of claim 2, for further imparting to the bonding a resistance to corrosive atmospheres and to wet atmospheres.

**4.** The use of claim 2 or 3, wherein the polymer P is obtained by radical copolymerization of a mixture having the following molar ratio, based on the total quantity of acrylic acid, methacrylic acid and 2-hydroxyethyl methacrylate phosphates of fomula (a):

- acrylic acid: from 5 to 50%, preferably from 20 to 40%
- methacrylic acid: from 0 to 90%, preferably from 25 to 90%, more preferably from 60 to 80%
- monomer M: from 1 to 30, for example from 1 to 20%, notably from 2 to 15%

**5.** The use of anyone of claim 2 to 4, wherein the polymer P has a number average molecular weight of at least 7,500 Da, e.g. 10 kDa to 1500 kDa.

**6.** The use according to any of claims 2 to 5, wherein the metal surface (S1) is a surface comprising a metal selected from aluminum, steel, zinc, magnesium titanium, copper and their alloys, or cobalt-nickel alloys.

**7.** The use according to claim 6, wherein the metal surface (S1) is a surface of aluminum or aluminum alloy.

**8.** The use according to any of claims 2 to 7, wherein the second surface (S2) is a metallic surface.

**9.** The use according to any of claims 2 to 7, wherein the second surface (S2) is a non-metallic surface, for example a plastic surface or a composite surface.

**10.** The use according to any of claims 2 to 9, wherein the polymer P is used for treating both surfaces (S1) and (S2) before the adhesive bonding of the two surfaces.

**11.** A process for coating a metal surface with a paint, a varnish or an adhesive, including a step of treating said surface with at least one composition including at least one polymer P as defined in claim 1.

**12.** A composition useful for the process of claim 11, including a polymer P as defined in claim 1.

**13.** A process for bonding a first metallic surface (S1) with a second surface (S2) (said surfaces being preferably as defined above), including :

- treating said first surface (S1) with at least one composition including at least one polymer P as defined in any of claim 1 to 4 ; and
- *optionally* treating the second surface (S2) with at least one composition including at least one polymer P in any of claim 1 to 4 ; and
- bonding the surfaces (S1) and (S2) *via* an adhesive composition applied between the two surfaces.

**14.** The process according to claim 9, wherein the composition comprising the polymer P is:

- a conversion composition including a polymer P ; and/or
- a solution or a dispersion of the polymer P, preferably applied on the surface after having applied a conversion coating on the surface to be treated ; and/or
- the adhesive composition, that comprises a polymer P.

**15.** A material comprising two adhesive-bonded surfaces including a first metal surface comprising a metal surface (S1) which is in all or part (i) treated with a polymer P as defined above and (ii) bonded to a second surface (S2) preferably as defined above, via an adhesive, said material being typically a material having a metal surface (S1) in all or part covered by:

- at least one coating (typically a conversion coating and/or a paint, a varnish or an adhesive layer) comprising at least one polymer P as defined in any of claim 1 to 3 ;
and/or
- a layer (typically a conversion coating) comprising a reaction product of the polymer P as defined above with a metal of the treated surface or another compound present in said layer, or a polymer P strongly linked with said other compound *(via* a complexation, a ionic bonding or hydrogen bonding for example).

Europäisches Patentamt
European Patent Office
Office européen des brevets

# EUROPEAN SEARCH REPORT

Application Number
EP 20 30 6448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2009/123742 A1 (VANDERMEULEN GUIDO [DE] ET AL) 14 May 2009 (2009-05-14)<br>* paragraph [0001] - paragraph [0002] *<br>* paragraph [0007] *<br>* paragraph [0043] - paragraph [0050] *<br>* paragraph [0260]; example 6 *<br>* paragraph [0303] - paragraph [0304] *<br>* paragraph [0309] - paragraph [0312] *<br>* claims 48-78 *<br>----- | 1-15<br>4 | INV.<br>C09J5/02<br>C09J9/00<br>C09J11/08<br>C09D5/08<br>C23F11/173<br>B05D7/14 |
| X<br>Y | EP 0 933 409 A1 (NIPPON PAINT CO LTD [JP]) 4 August 1999 (1999-08-04)<br>* paragraph [0002] *<br>* paragraph [0035] - paragraph [0036] *<br>* paragraph [0039] *<br>* paragraph [0052] *<br>* claims 1-27 *<br>----- | 1-3, 5-12,14<br>4 | |
| X<br>Y | EP 1 288 338 A1 (ROHM & HAAS [US]) 5 March 2003 (2003-03-05)<br>* paragraph [0018] *<br>* paragraph [0024] - paragraph [0025] *<br>* paragraph [0047] - paragraph [0049] *<br>* claims 1-10 *<br>----- | 1-3,5-15<br>4 | TECHNICAL FIELDS SEARCHED (IPC) |
| X<br>Y | US 2006/162820 A1 (DIETSCHE FRANK [DE] ET AL) 27 July 2006 (2006-07-27)<br>* paragraph [0022] - paragraph [0029] *<br>* paragraph [0001] - paragraph [0002] *<br>* paragraph [0073] *<br>----- | 1-3,5-15<br>4 | C09J<br>C23F<br>C09D<br>C23D<br>B05D |

The present search report has been drawn up for all claims

1

| Place of search | Date of completion of the search | Examiner |
|---|---|---|
| Munich | 11 May 2021 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 30 6448

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2021

| Patent document cited in search report | Publication date | Patent family member(s) | Publication date |
|---|---|---|---|
| US 2009123742 A1 | 14-05-2009 | BR PI0710724 A2 | 31-01-2012 |
| | | CA 2648483 A1 | 08-11-2007 |
| | | CN 101479350 A | 08-07-2009 |
| | | EP 2013297 A2 | 14-01-2009 |
| | | ES 2429906 T3 | 18-11-2013 |
| | | JP 2009534540 A | 24-09-2009 |
| | | KR 20080110906 A | 19-12-2008 |
| | | US 2009123742 A1 | 14-05-2009 |
| | | WO 2007125038 A2 | 08-11-2007 |
| EP 0933409 A1 | 04-08-1999 | EP 0933409 A1 | 04-08-1999 |
| | | JP H10182916 A | 07-07-1998 |
| | | KR 19980033027 A | 25-07-1998 |
| | | US 6146473 A | 14-11-2000 |
| | | WO 9817736 A1 | 30-04-1998 |
| EP 1288338 A1 | 05-03-2003 | CA 2398425 A1 | 04-03-2003 |
| | | CN 1407058 A | 02-04-2003 |
| | | EP 1288338 A1 | 05-03-2003 |
| | | JP 2003183863 A | 03-07-2003 |
| | | KR 20030020827 A | 10-03-2003 |
| | | MX PA02008469 A | 26-08-2005 |
| | | US 2003063998 A1 | 03-04-2003 |
| US 2006162820 A1 | 27-07-2006 | BR PI0407941 A | 21-02-2006 |
| | | CA 2518077 A1 | 23-09-2004 |
| | | CN 1759152 A | 12-04-2006 |
| | | DE 10310972 A1 | 23-09-2004 |
| | | EP 1606362 A2 | 21-12-2005 |
| | | JP 4357527 B2 | 04-11-2009 |
| | | JP 2006520852 A | 14-09-2006 |
| | | KR 20050115901 A | 08-12-2005 |
| | | MX PA05008515 A | 20-10-2005 |
| | | US 2006162820 A1 | 27-07-2006 |
| | | WO 2004081128 A2 | 23-09-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 20109411 A
- WO 20109413 A
- WO 9713588 A
- US 4191596 A
- US 4921552 A


### Non-patent literature cited in the description


- *Separation and Purification Technology,* 2019, vol. 224, 388-396